# EUROPEAN PATENT SPECIFICATION

(11) **EP 3 090 178 B1**
(45) Date of publication and mention of the grant of the patent: **06.09.2017**
(21) Application number: 13818751.3
(22) Date of filing: 23.12.2013
(51) Int. Cl.: F04B 39/00, F16C 3/10, F16C 3/20, F16F 15/26, F16F 15/36, F16F 15/28

(54) **CRANKSHAFT WITH IMPROVED BALANCE AND RECIPROCATING COMPRESSOR HAVING THE SAME**
KURBELWELLE MIT VERBESSERTER AUSWUCHTUNG UND HUBKOLBENVERDICHTER DAMIT
VILEBREQUIN POSSÉDANT UN MEILLEUR ÉQUILIBRE ET COMPRESSEUR ALTERNATIF LE COMPRENANT

(43) Date of publication of application: 09.11.2016
(73) Proprietor: Arçelik Anonim Sirketi, 34950 Istanbul (TR)
(72) Inventor: KERPICCI, Husnu, 34950 Istanbul (TR); DORTKARDESLER, Serkan, 34950 Istanbul (TR); UZUN, Yasam, 34950 Istanbul (TR)
(86) International application number: PCT/EP2013/077906
(87) International publication number: WO 2015/096850

(56) References cited:
- CN-Y- 201 433 875
- DE-A1-102006 030 493

## Description

The present invention relates to a crankshaft suitable for use in a reciprocating compressor of a refrigeration appliance, in particular a domestic refrigerator, which has a variable refrigeration capacity.

A refrigeration appliance such as a domestic refrigerator typically utilizes a reciprocating compressor to cyclically convey the refrigerant from an evaporator to a condenser. A conventional reciprocating compressor includes a cylinder block which has a compression chamber, a cylinder head which has an intake chamber and an exhaust chamber, a piston mechanism for compressing the refrigerant in the compression chamber and an electrical motor for driving the piston mechanism. In the conventional reciprocating compressor, a valve plate is interposed between the cylinder block and the cylinder head. By virtue of the valve plate, the compression chamber is selectively brought into fluid connection with the intake chamber and the exhaust chamber. The valve plate generally comprises an intake port and exhaust port. The intake port and exhaust port are typically configured by the reed valves which allow the refrigerant to flow only in a single direction. The intake chamber is located on a downstream side of the evaporator whereas the exhaust chamber is located on an upstream side of the condenser. In the conventional reciprocating compressor, the piston mechanism includes a piston head which is arranged to reciprocate within the compression chamber, a connecting rod and a crankshaft which are serially coupled to each other. The crankshaft is rotatably supported through a bearing formed into the cylinder block. In the conventional reciprocating compressor, the electrical motor includes a stator and a rotor which are typically configured as an asynchronous motor or a brushless direct current motor. The rotor is fixed to the crankshaft of the piston mechanism. As the piston moves outwards, the intake port fluidly connects the intake chamber with the compression chamber. Thereby, the refrigerant is sucked into the chamber. As the piston moves inwards, the exhaust port fluidly connects the compression chamber (cylinder) with the exhaust chamber. Thereby, the compressed refrigerant is discharged out of the compression chamber.

During the reciprocating movement of the piston, relatively high forces are generated which, in turn, act on the bearings especially when the refrigerant is being compressed by the piston mechanism. These forces set up vibrations in the compressor. Therefore, a counterweight is usually formed on the crankshaft in order to reduce the forces on the bearings and in order to diminish the vibrations.

CN201433875 (Y) discloses a conventional crankshaft for use in a reciprocating compressor of refrigeration appliance. This conventional crankshaft has a counterweight. The size of the counterweight is adjusted at the manufacturing stage of the conventional crankshaft.

The forces acting on the bearings generally change when the refrigeration capacity of the compressor is varied. The refrigeration capacity of the compressor can be varied for example by increasing/decreasing a rotational speed of the crankshaft. Thus, a drawback of the aforementioned conventional crankshaft is that its counterweight will not adequately balance the forces if it is installed into a reciprocating compressor which has a variable refrigeration capacity. Therefore, the aforementioned conventional crankshaft cannot be reliably used in a reciprocating compressor with variable capacity.

An objective of the present invention is to provide a crankshaft which overcomes the aforementioned drawbacks of the prior art and which facilitates adjustment of the counterweight in accordance with a variable refrigeration capacity.

This objective has been achieved by the crankshaft according to the present invention as defined in claim 1. Further achievements have been attained by the subject-matters respectively defined in the dependent claims.

The crankshaft of the present invention comprises an additional counterweight which is slidably seated into a retainer formed on a main counterweight so as to radially move outwards or inwards respectively between an outer position and an inner position, wherein the additional counterweight is resiliently biased towards a rest position.

In an embodiment, the retainer is configured by a recess and a couple of springs, namely an outer spring and an inner spring which are arranged on opposing sides of the additional counterweight which is seated in the recess. In this embodiment, the rest position is an intermediate position between the inner position and the outer position. The outer spring is maximally compressed when the crankshaft is rotated at the highest refrigeration capacity. The inner spring prevents the recess and the additional counterweight from damages and enables the additional counterweight to smoothly move back to its rest position when the rotation of the crankshaft is terminated.

The movably disposed additional counterweight counteractively responds to the changes in the rotational speed of the crankshaft so that the forces acting on the bearing and the resulting vibrations can be effectively diminished over a wide range of rotational speeds of the crankshaft. By the present invention, a required amount of an additional counterweight can be quickly and easily assembled with the retainer to safely operate the crankshaft. In the present invention, the retainer is not limited to the use of a single additional counterweight. A different additional counterweight, i.e., an additional counterweight with a different mass can be seated into the same retainer. Thereby, the same crankshaft can be used in compressors with different variable capacities. By the present invention, a usability of the crankshaft has been increased.

Additional advantages of the crankshaft according to the present invention will become apparent with the detailed description of the embodiments with reference to the accompanying drawings in which:
Figure 1 - is a schematic perspective view of a crankshaft according to an embodiment of the present invention;
Figure 2 - is a schematic top view of a crankshaft according to an embodiment of the present invention;
Figure 3 - is a schematic perspective cut away view of the crankshaft according to an embodiment of the present invention;
Figure 4 - is a schematic perspective exploded view of the crankshaft according to an embodiment of the present invention;
Figure 5 - is a schematic view of a reciprocating compressor according to an embodiment of the present invention.

The reference signs appearing on the drawings relate to the following technical features.
- 1.: Crankshaft
- 2.: Reciprocating compressor
- 3.: Shank
- 4.: Overhang portion
- 5.: Pin
- 6.: Connecting rod
- 7.: Piston head
- 8.: Main counterweight
- 9.: Additional counterweight
- 10.: First spring
- 11.: Second spring
- 12.: Recess
- 13.: Upper surface
- 14.: Thin plate
- 15.: Bracket
- 16.: Through holes
- 17.: Lubricant
- 18.: Projections
- 19.: Cylinder block
- 20.: Compression chamber
- 21.: Cylinder head
- 22.: Electrical motor
- 22a.: Stator
- 22b.: Rotor
- 23.: Casing
- 24.: Spring
- 25.: Retainer

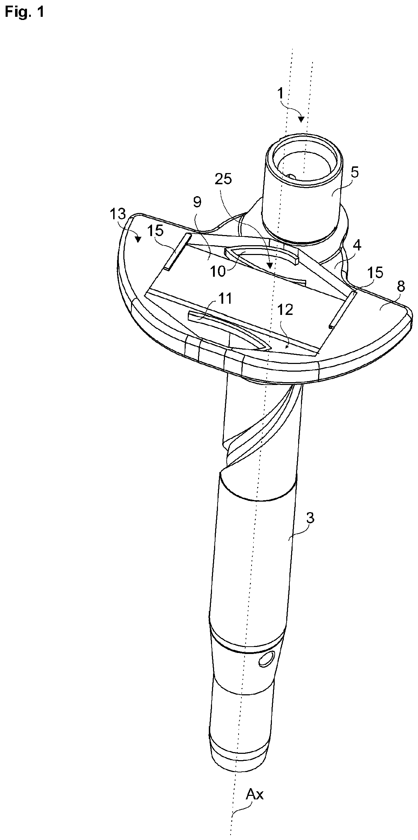

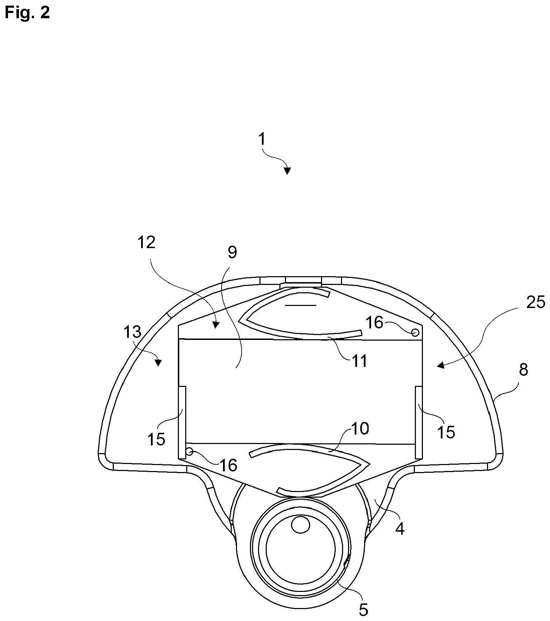

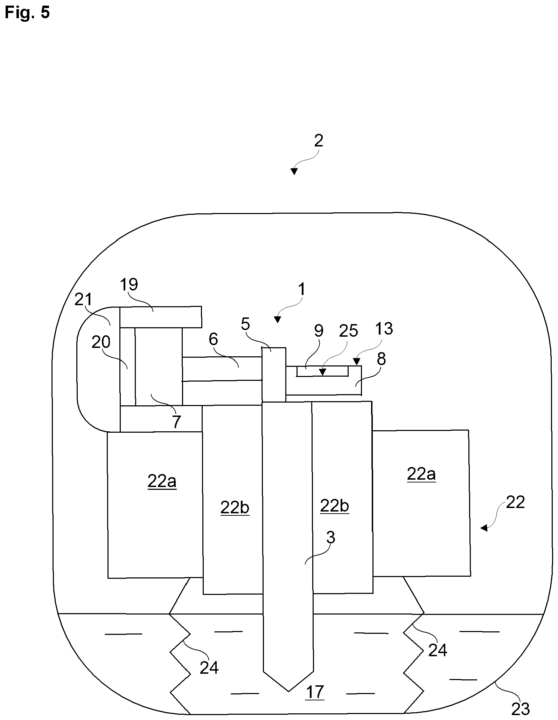

The crankshaft (1) is suitable for use in a reciprocating compressor (2) of a refrigeration appliance. The reciprocating compressor (2) has a variable refrigeration capacity. The crankshaft (1) comprises a shank (3) which is integrally provided with an overhang portion (4), a pin (5) which is pivotably attachable to a connecting rod (6) which is coupled to a piston head (7). The pin (5) is formed on the overhang portion (4) eccentrically with respect to a rotation axis (Ax) of the shank (3). The crankshaft (1) further comprises a main counterweight (8) which is formed by the overhang portion (4). The center of mass of the main counterweight (8) is radially opposed to the pin (5) and radially offset from the rotation axis (Ax) (Figs. 1 to 5).

The crankshaft (1) according to the present invention further comprises a retainer (25) formed on the main counterweight (8) and an additional counterweight (9) which is slidably seated into the retainer (25) so as to radially move outwards or inwards respectively between an outer position and an inner position. The additional counterweight (9) is resiliently biased towards a rest position (Figs. 1 to 5).

As the crankshaft (1) is set into rotation, the additional counterweight (9) gradually departs from its rest position and moves radially towards the outer position under the influence of the centrifugal force. The extent of deviation from the rest position depends of the speed of rotation of the crankshaft (1). The additional counterweight (9) reaches the outer position when the crankshaft (1) is rotated at a predetermined maximum rotational speed which corresponds to the maximum refrigeration capacity. When the crankshaft (1) is stopped, the additional counterweight (9) returns to the rest position under the influence of the biasing force. In general, the inertial forces acting on the crankshaft (1) through the reciprocating parts such as the connecting rod (6) and the piston (7) increase as the rotational speed of the crankshaft (1) increases. Since the additional counterweight (9) moves outwards with increasing rotational speed, it correspondingly counteracts the aforementioned inertial forces. Thereby, the net force acting on the bearings decreases and the vibrations diminish (Figs. 1 to 5).

In an embodiment, the retainer (25) comprises a first spring (10), a second spring (11), and a recess (12) which is formed into an upper surface (13) of the main counterweight (8). The additional counterweight (9) is seated into the recess (12) between the first spring (10) and the second spring (11). In this embodiment, the rest position is an intermediate position between the inner position and the outer position. In this embodiment, when the crankshaft (1) is stopped, the additional counterweight (9) returns to the rest position under the influence of the biasing force. The stiffness of the first spring (10) and the second spring (11) are chosen such that the counterweight (9) is smoothly damped towards the rest position. Thereby, any damages to the recess (12) and the additional counterweight (9) itself is prevented (Figs. 1 to 5).

In an alternative embodiment (not shown), differently from the previous embodiment, the retainer (25) has no first spring (10). In this embodiment, the rest position is the inner position.

In another embodiment, the first spring (10) and the second spring (11) are respectively compression springs. In a version of this embodiment, the first spring (10) and the second spring (11) are respectively leaf springs (Figs. 1 to 5). In an alternative version of this embodiment (not shown), the first spring (10) and the second spring (11) are respectively compression coil springs.

In another alternative embodiment (not shown), the first spring (10) and the second spring (11) are respectively tension springs.

In another embodiment, the recess (12) has two elongate notches (not shown) for respectively fixing the first spring (10) and the second spring (11).

In another embodiment, the additional counterweight (9) comprises one or more than one rectangular-shaped thin plate (14) which has a predetermined weight. In this embodiment, the recess (12) is a groove which extends in the radial direction. The recess (12) has a shape which matches a shape of the thin plate (14). In addition, a clearance is provided at the interface between the thin plate (14) and the recess (12). The recess (12) also has sufficient space for fixing the first spring (10) and the second spring (12) on opposing sides of the thin plate (14) along the radial direction (Figs. 1 to 5).

In another embodiment, the additional counterweight (9) is secured to the recess (12) through one or more than one bracket (15). The brackets (15) prevent the additional counterweight (9) from escaping from the retainer (25) (Figs. 1 to 5).

In another embodiment, the recess (12) has one more than one through hole (16) for draining excessive lubricant (17). In a version of this embodiment, the through holes (16) are arranged in a vicinity of the corners of the recess (12) (Figs. 1 to 5).

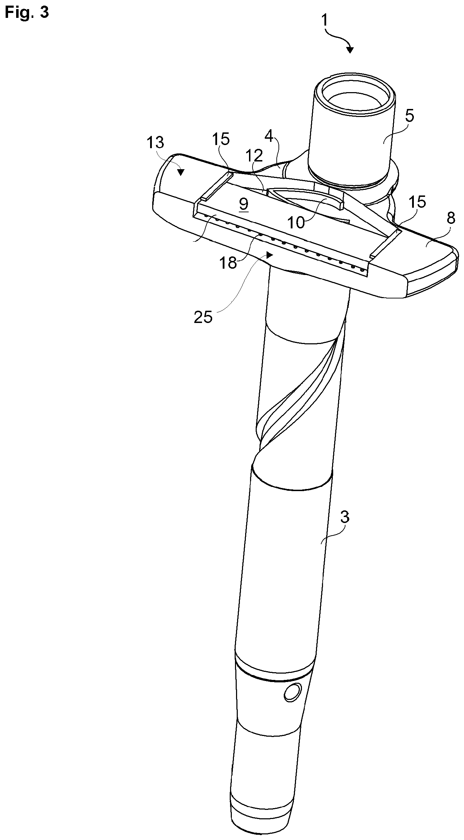

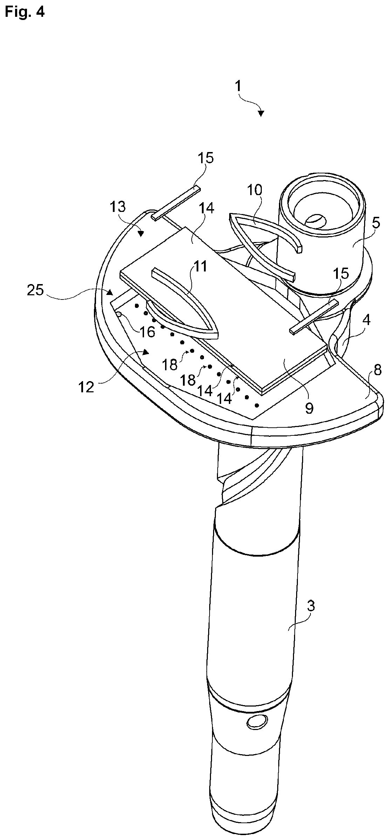

In another embodiment, a bottom of the recess (12) has a plurality of projections (18) arranged to contact a lower side of the additional counterweight (9). The projections (18) provide an air gap between the additional counterweight (9) and the bottom of the recess (12). Thereby, the additional counterweight can easily move back and forth under the influence of the centrifugal force and the biasing force. In a version of this embodiment, the projections (18) have cylindrical-shape (Figs. 3 and 4).

In another embodiment, the center of mass of the main counterweight (8), a center of mass of the additional counterweight (9), the inner position, the rest position, and the outer position are arranged in a same plane which includes the rotation axis (Ax). In a version of this embodiment, the rest position is the inner position. In an alternative version of this embodiment, the rest position is an intermediate position between the inner position and the outer position.

The present invention also provides a reciprocating compressor (2). The reciprocating compressor (2) comprises a cylinder block (19) which includes a compression chamber (20); a cylinder head (21) which includes an intake chamber and an exhaust chamber and a piston mechanism for compressing a refrigerant in the compression chamber (20). The piston mechanism includes the crankshaft (1) of the present invention, a connecting rod (6) which is coupled at one of its ends to a pin (5) of the crankshaft (1), and a piston head (7) which is coupled to the other end of the connecting rod (6) and arranged to reciprocate in the compression chamber (20). The reciprocating compressor (2) of the present invention further comprises an electrical motor (22) for driving the piston mechanism. The electrical motor (22) includes a stator (22a) and a rotor (22b). The rotor (22b) is fixed to the shaft (3). The reciprocating compressor (2) further comprises a casing (23). The cylinder block (19) is fixed to the casing (23) through a couple of springs (24). A bottom of the casing (23) has a sump of lubricant (17) (Figs. 1 to 5).

The present invention also provides a refrigeration appliance (not shown) which comprises the reciprocating compressor (2) of the present invention. A control unit of the refrigeration appliance is configured to operate the electrical motor (22) of the reciprocating compressor (2) in accordance with a variable refrigeration capacity.

The additional counterweight (9) balances the forces acting on the bearing and diminishes the resulting vibrations by way of counteractively responding to the changes in the rotational speed of the crankshaft (1). Thereby, the crankshaft (1) is protected from excessive stress and its service life is extended.

## Claims

1. A crankshaft (1) suitable for use in a reciprocating compressor (2) of a refrigeration appliance, wherein the reciprocating compressor (2) has a variable refrigeration capacity, the crankshaft (1) comprising a shank (3) which is integrally provided with an overhang portion (4), a pin (5) for pivotably attaching a connecting rod (6) which is coupled to a piston head (7), wherein the pin (5) is formed on the overhang portion (4) eccentrically with respect to a rotation axis (Ax) of the shank (3) and a main counterweight (8) which is formed by the overhang portion (4), wherein a center of mass of the main counterweight (8) is radially opposed to the pin (5) and radially offset from the rotation axis (Ax), **characterized by** a retainer (25) formed on the main counterweight (8) and an additional counterweight (9) which is slidably seated into the retainer (25) so as to radially move outwards or inwards respectively between an outer position and an inner position, wherein the additional counterweight (9) is resiliently biased towards a rest position.

2. The crankshaft (1) according to claim 1, **characterized in that** the retainer (25) comprising a first spring (10), a second spring (11) and a recess (12) which is formed into an upper surface (13) of the main counterweight (8), wherein the additional counterweight (9) is seated into the recess (12) between the first spring (10) and the second spring (11), wherein the rest position is an intermediate position between the inner position and the outer position.

3. The crankshaft (1) according to claim 2, **characterized in that** the first spring (10) and the second spring (11) are respectively compression springs.

4. The crankshaft (1) according to claim 3, **characterized in that** the first spring (10) and the second spring (11) are respectively leaf springs.

5. The crankshaft (1) according to any one of claims 2 to 4, **characterized in that** the recess (12) has two elongate notches for respectively fixing the first spring (10) and the second spring (11).

6. The crankshaft (1) according to any one of claims 2 to 5, **characterized in that** the additional counterweight (9) comprising a rectangular-shaped thin plate (14).

7. The crankshaft (1) according to according to any one of claims 2 to 6, **characterized in that** the additional counterweight (9) is secured to the recess (12) through one or more than one bracket (15).

8. The crankshaft (1) according to any one of claims 2 to 7, **characterized in that** the recess (12) has one more than one through holes (16) for draining lubricant (17).

9. The crankshaft (1) according to any one of claims 2 to 8, **characterized in that** a bottom of the recess (12) has a plurality of projections (18) arranged to contact a lower surface of the additional counterweight (9).

10. The crankshaft (1) according to claim 9, **characterized in that** the projections (18) having cylindrical-shape.

11. The crankshaft (1) according to any one of claims 1 to 10, **characterized in that** the center of mass of the main counterweight (8), a center of mass of the additional counterweight (9), the inner position, the rest position, and the outer position are arranged in a same plane which includes the rotation axis (Ax).

12. The crankshaft (1) according to claim 11, **characterized in that** the rest position is the inner position or an intermediate position between the inner position and the outer position.

13. A reciprocating compressor (2) comprising
a cylinder block (19) which includes a compression chamber (20),
a cylinder head (21) which includes an intake chamber and an exhaust chamber,
a piston mechanism for compressing a refrigerant in the compression chamber (20), wherein the piston mechanism includes the crankshaft (1) according to any one of claims 1 to 12, a connecting rod (6) coupled at one of its ends to a pin (5) of the crankshaft (1), and a piston head (7) coupled to the other end of the connecting rod (6) and arranged to reciprocate in the compression chamber (20) and an electrical motor (22) for driving the piston mechanism.

14. A refrigeration appliance, in particular a domestic refrigerator comprising the reciprocating compressor (2) according to claim 13 and a control unit configured to operate the electrical motor (22) of the reciprocating compressor (2) in accordance with a variable refrigeration capacity.

## Patentansprüche

1. Eine Kurbelwelle (1) geeignet für Gebrauch in einem Hubkolbenkompressor (2) einer Kühlungsvorrichtung, wobei der Hubkolbenkompressor (2) eine veränderliche Kälteerzeugungskapazität, die Kurbelwelle (1) bestehend aus einem Schaft (3), der ganz versehen ist mit einem Überhanganteil (4), einer Nadel (5) für drehbare Anhaftung zu einer Verbindungsstange (6), die gekoppelt ist zu einem Kolbenboden (7), wobei die Nadel auf dem Überhanganteil (4) exzentrisch bezüglich zu einer Rotationsachse (Ax) der Schaft (3) gebildet ist und einem Hauptgegengewicht (8), das vom Überhanganteil (4) gebildet ist, wobei ein Massenzentrum des Gegengewichts radial zur Nadel (5) gegenübergestellt ist und radial ausgeglichen ist von der Rotationsachse (Ax), **gekennzeichnet** mit einem Halter (25), der auf dem Hauptgegengewicht (8) gebildet ist und einem Zusatzgegengewicht (9), das rutschbar eingesetzt ist auf den Halter (25), sodaß radial nach außen oder innen bewegt werden kann bezüglich zwischen einer Außenposition und einer Innenposition, wobei Zusatzgegengewicht (9) elastisch verbunden ist in Richtung auf einer Ruhestellung.

2. Die Kurbelwelle (1) nach Anspruch 1, **dadurch gekennzeichnet, daß** der Halter (25) bestehend aus einer Erstfeder (10), einer Zweitfeder (11) und einer Nische (12), die in die Oberfläche (13) des Hauptgegengewichts (8) gebildet ist, wobei Zusatzgegengewicht (9) eingesetzt ist in die Nische (12) zwischen der Erstfeder (10) und Zweitfeder (11), wobei die Ruhestellung eine Zwischenposition zwischen der Innenposition und Außenposition ist.

3. Die Kurbelwelle (1) nach Anspruch 2, **dadurch gekennzeichnet, daß** die Erstfeder (10) und Zweitfeder (11) jeweilige Druckfedern sind.

4. Die Kurbelwelle (1) nach Anspruch 3, **dadurch gekennzeichnet, daß** die Erstfeder (10) und Zweitfeder (11) jeweilige Blattfedern sind.

5. Die Kurbelwelle (1) nach den vorhergehenden Ansprüchen 2 bis 4, **dadurch gekennzeichnet, daß** die Nische (12) zwei längliche Kerben hat für jeweilige Fixierung der Erstfeder (10) und der Zweitfeder (11).

6. Die Kurbelwelle (1) nach den vorhergehenden Ansprüchen 2 bis 5, **dadurch gekennzeichnet, daß** das Zusatzgegengewicht (9) aus einer rechteckförmigen Dünnplatte (14) besteht.

7. Die Kurbelwelle (1) nach den vorhergehenden Ansprüchen 2 bis 6, **dadurch gekennzeichnet, daß** das Zusatzgegengewicht (9) gesichert ist zur Nische (12) durch eine oder mehrere Stützen (15).

8. Die Kurbelwelle (1) nach den vorhergehenden Ansprüchen 2 bis 7, **dadurch gekennzeichnet, daß** die Nische (12) ein mehr als einem Durchgangsloch (16) hat für die Drainage von Schmierstoff (17).

9. Die Kurbelwelle (1) nach den vorhergehenden Ansprüchen 2 bis 8, **dadurch gekennzeichnet, daß** der Grund der Nische (12) eine Vielzahl von Projektionen (18) hat, die eingeordnet sind, um die Unterfläche der Zusatzgegengewichte (9) zu berühren.

10. Die Kurbelwelle (1) nach Anspruch 9, **dadurch gekennzeichnet, daß** die Projektionen (18) zylinderförmig sind.

11. Die Kurbelwelle (1) nach den vorhergehenden Ansprüchen 1 bis 10, **dadurch gekennzeichnet, daß** das Massenzentrum des Hauptgegengewichts (8), ein Massenzentrum des Zusatzgegengewichts (9), die Innenposition, Ruhestellung, und Außenposition eingeordnet sind in einer derselben Ebene, die die Rotationsachse (Ax) beinhaltet.

12. Die Kurbelwelle (1) nach Anspruch 11, **dadurch gekennzeichnet, daß** die Ruhestellung eine Innenposition oder eine Zwischenposition zwischen der Innenposition und Außenposition ist.

13. Ein Hubkolbenkompressor (2) bestehend aus einem Zylinderblock (19), der einen Druckraum (20) beinhaltet, einem Zylinderkopf (21), der einen Aufnahmeraum und einen Ausgangraum beinhaltet, einem Kolbenmechanismus fürBedrücken einer Kühlmittel im Druckraum (20), wobei das Kolbenmechanismus beinhaltet die Kurbelwelle (1), nach den vorhergehenden Ansprüchen 1 bis 12, einer Verbindungsstange (6) gekoppelt an einer ihren Enden zu einer Nadel (5) der Kurbelwelle (1), und einem Kolbenboden (7) gekoppelt zum anderen Ende der Verbindungsstange (6) und eingeordnet zum Pendeln im Druckraum (20) und einem Elektromotor (22) für den Betrieb des Kolbenmechanismus.

14. Eine Kühlungsvorrichtung, insbesondere ein inländischer Kühlschrank bestehend aus einem Hubkolbenkompressor (2) nach Anspruch 13 und einer Kontrolleinheit, die konfiguriert ist, um den Elektromotor (22) des Hubkolbenkompressors (2) entsprechend veränderlicher Kälteerzeugungskapazität zu betätigen.

## Revendications

1. Un vilebrequin (1) apte à êtreutilisédans un compresseuralternatif (2) d'un appareil de réfrigération, danslequel le compresseuralternatif (2) présenteunecapacité de réfrigération variable, le vilebrequin (1) comprenantunetige (3) qui estpourvueintégralementd'unepartie de surplomb (4), uneépingle (5) pour fixer de façonpivotanteunebielle (6) qui estcouplée à une tête de piston (7), dans lequel l' épingle (5) estforméesur la partie de surplomb (4) de manièreexcentrique par rapport à un axe de rotation (Ax) de la tige (3) et un contrepoids principal (8) qui estformépar la partie de surplomb (4), danslequel un centre de masse du contrepoids principal (8) estradialementopposé à l'épingle (5) et radialementdécalé de l'axe de rotation (Ax), **caractérisé par** un élément de retenue (25) formésur le contrepoids principal (8) et un contrepoidssupplémentaire (9) qui estlogé de manièrecoulissantedansl'élément de retenue (25) de manière à se déplacer radialement vers l'extérieur ou vers l'intérieur respectivement entre une position extérieure et une position intérieure, danslequel le contrepoidssupplémentaire (9) estélastiquementsollicitéversune position de repos.

2. Vilebrequin (1) selon la revendication 1, **caractérisé en ce que** l'élément de retenue (25) comprend un premier ressort (10), un second ressort (11) et un évidement (12) qui estformé en une surface supérieure (13) ducontrepoids principal (8), danslequel le contrepoidssupplémentaire (9) estsituédansl'évidement (12) entre le premier ressort (10) et le second ressort (11), danslequel la position de repos estune position intermédiaire entre la position intérieure et la position extérieure.

3. Vilebrequin (1) selon la revendication 2, **caractérisé en ce que** le premier ressort (10) et le second ressort (11) sontrespectivement des ressorts de compression.

4. Vilebrequin (1) selon la revendication 3, **caractérisé en ce que** le premier ressort (10) et le second ressort (11) sontrespectivement des ressorts à lame.

5. Vilebrequin (1) selonl'unequelconque des revendications 2 à 4, **caractérisé en ce que** l'évidement (12) comportedeuxencochesallongées pour fixer respectivement le premier ressort (10) et le second ressort (11).

6. Vilebrequin (1) selonl'unequelconque des revendications 2 à 5, **caractérisé en ce que** le contrepoidssupplémentaire (9) comprendune plaque mince de formerectangulaire (14).

7. Vilebrequin (1) selonl'unequelconque des revendications 2 à 6, **caractérisé en ce que** le contrepoidssupplémentaire (9) estfixé à l'évidement (12) par l'intermédiaire d'un ou plus d'un support (15).

8. Vilebrequin (1) selonl'unequelconque des revendications 2 à 7, **caractérisé en ce que** l'évidement (12) comporte plus d'un trou (16) pour drainer le lubrifiant (17).

9. Vilebrequin (1) selonl'unequelconque des revendications 2 à 8, **caractérisé en ce qu'**un fond de l'évidement (12) comporteunepluralité de saillies (18) agencées pour entrer en contact avec une surface inférieure du contrepoidssupplémentaire (9).

10. Vilebrequin (1) selon la revendication 9, **caractérisé en ce que** les saillies (18) ontuneformecylindrique.

11. Vilebrequin (1) selonl'unequelconque des revendications 1 à 10, **caractérisé en ce que** le centre de masse du contrepoids principal (8), un centre de masse du contrepoidssupplémentaire (9), la position intérieure, la position de repos, et la position extérieuresontagencéesdans un même plan qui comprend l'axe de rotation (Ax).

12. Vilebrequin (1) selon la revendication 11, **caractérisé en ce que** la position de repos est la position intérieureouune position intermédiaire entre la position intérieure et la position extérieure.

13. Uncompresseuralternatif (2) comprenant
un bloc-cylindres (19) qui comprendunechambre de compression (20)
unetête de cylindre (21) qui comprend une chambre d'admission et
unechambred'échappement,
unmécanisme à piston pour comprimer un réfrigérantdans la chambre de compression (20), danslequel le mécanisme à piston comprend le vilebrequin (1) selonl'unequelconque des revendications 1 à 12, unebielle (6) couplée à l'une de sesextrémités à unetige (5) du vilebrequin (1) et une tête de piston (7) couplée à l'autreextrémité de la bielle (6) et agencéepour faire un mouvement de va-et-vientdans la chambre de compression (20) et un moteurélectrique (22) pour entraîner le mécanisme à piston.

14. Unappareil de réfrigération, en particulierun réfrigérateurdomestiquecomprenant le compresseur alternatif (2) selon la revendication 13 et uneunité de commandeconfigurée pour faire fonctionner le moteurélectrique (22) du compresseur alternatif (2) selonunecapacité de refrigeration variable.
